# EUROPEAN PATENT APPLICATION

(11) **EP 4 692 963 A1**
(43) Date of publication of application: **11.02.2026**
(21) Application number: 24779954.7
(22) Date of filing: 22.03.2024
(51) Int. Cl.: G05B 19/18, B23Q 11/00

(54) **NUMERICAL CONTROL DEVICE, MACHINE TOOL, CONTROL METHOD, PROGRAM, AND STORAGE MEDIUM**

(30) Priority: 31.03.2023 JP 2023058609
(71) Applicant: BROTHER KOGYO KABUSHIKI KAISHA, Nagoya-shi, Aichi 467-8561 (JP)
(72) Inventor: OKUMURA Ryota, Nagoya-shi, Aichi 467-8562 (JP); TAKAHASHI Keiya, Nagoya-shi, Aichi 467-8562 (JP)
(74) Representative: Becker, Eberhard
(86) International application number: PCT/JP2024/011270
(87) International publication number: WO 2024/203836

(57) **Abstract**

Provided are a numerical control device, a machine tool, a control method, a program, and a storage medium with which it is possible to drive a cutting fluid jetting mechanism at an appropriate timing. On the basis of a processing program, chips are generated by the processing of a workpiece disposed in a cover, and a CPU controls a jetting mechanism that washes away the chips by jetting a cutting liquid into the cover through the driving of a pump. The CPU determines whether or not a specific time Tsp before a first prescribed time from the time when the processing program ends has been reached, on the basis of the processing time from the start of processing based on the processing program to the end of processing (S13, S21). When the CPU determines that the specific time Tsp has been reached (S13: YES, S21: YES), the CPU drives the pump for the first prescribed time from the specific time Tsp to the end of the processing program (S29).

## Description

### Technical Field

The present invention relates to a numerical control device, a machine tool, a control method, a program, and a storage medium.

### Description of Related Art

The control device described in Patent Literature 1, during execution of an NC program, determines whether or not a block exists in multiple blocks constituting the NC program in which an operating part such as a spindle or coolant enters a standby state. The control device, in the case where a block that enters a standby state exists, upon execution of the block, determines whether or not power supplied to a power source corresponding to the operating part, for example, a spindle motor or a coolant pump, can be cut off.

### Related Art

### Patent Literature

Patent Literature 1: Japanese Patent Application Laid-Open No. 2018-067346

### SUMMARY

### Technical Problem

With the above-described control device, since power is cut off merely in the case of entering a standby state, the supply of coolant by the coolant supply part might become excessive, and the power consumption by the coolant supply part might be unable to be appropriately suppressed.

An object of the present invention is to provide a numerical control device, a machine tool, a control method, a program, and a storage medium that can drive a cutting fluid spouting mechanism at an appropriate timing.

### Solution to the Problem

A numerical control device according to claim 1 controls a machine tool which includes a spouting mechanism that washes away chips generated by processing a workpiece disposed inside a cover based on a processing program, by spouting cutting fluid into the cover by driving a pump, and the numerical control device includes: a first determination part that determines, based on a processing time from a processing start to a processing end based on the processing program, whether or not a specific time which is before a first prescribed time from a time at which the processing program ends, has been reached; and a first pump drive part that drives, when the first determination part determines that the specific time has been reached, the pump for the first prescribed time from the specific time until an end of the processing program.

The numerical control device, by the driving of the pump for the first prescribed time, can reliably wash away chips by the end of the processing program. Therefore, the numerical control device can drive the spouting mechanism of cutting fluid at an appropriate timing.

A numerical control device according to claim 2 may include a second pump drive part that intermittently drives the pump during execution of the processing program. Therefore, the numerical control device can reduce power consumption compared to a case in which the pump is constantly driven.

In a numerical control device according to claim 3, the second pump drive part repeatedly executes driving the pump for a first time, and after the driving of the pump for the first time, stopping the pump for a second time, and the first prescribed time may be shorter than the first time. According to some processing programs, there are cases where merely a small amount of chips is generated in the latter half of processing. In such a case, even if the first prescribed time is shorter than the first time, chips can be sufficiently washed away, and therefore power consumption can be reduced.

In a numerical control device according to claim 4, during execution of the processing program, the second pump drive part repeatedly executes driving the pump for a first time, and after the driving of the pump for the first time, stopping the pump for a second time, and the first prescribed time may be longer than the first time. Before the end of the processing program, the numerical control device drives the pump for a first prescribed time, which is longer than the first time for which the driving of the pump is repeatedly performed. Therefore, the numerical control device can more reliably wash away chips by the end of the processing program.

A numerical control device according to claim 5 includes: a second pump drive part that repeatedly executes driving the pump for a first time, and after the driving of the pump for the first time, stopping the pump for a second time during execution of the processing program; a second determination part that determines whether or not a second prescribed time from a last drive stop of the pump before the end of the processing program until the specific time is shorter than a predetermined reference time; and a setting part that sets, when the second determination part determines that the second prescribed time is shorter than the reference time, a time from a drive start time of the pump of the last first time until the end of the processing program to the first prescribed time, and the first pump drive part may drive the pump for the first prescribed time set by the setting part. The numerical control device, by resetting the first prescribed time, can prevent the pump from being repeatedly stopped and driven in a short time. Therefore, the numerical control device can achieve low power consumption.

A machine tool according to claim 6 includes: the spouting mechanism that washes away the chips generated by processing the workpiece disposed inside the cover based on the processing program, by spouting the cutting fluid into the cover by driving the pump; and the numerical control device according to any one of claims 1 to 5.

The machine tool obtains the same effects as the numerical control device according to any one of claims 1 to 5.

A control method according to claim 7 is for a numerical control device for controlling a machine tool which includes a spouting mechanism that washes away chips generated by processing a workpiece disposed inside a cover based on a processing program, by spouting cutting fluid into the cover by driving a pump, and the control method includes: a first determination step of determining, based on a processing time from a processing start to a processing end based on the processing program, whether or not a specific time which is before a first prescribed time from a time at which the processing program ends has been reached; and a first pump drive step of driving, when the first determination step determines that the specific time has been reached, the pump for the first prescribed time from the specific time until an end of the processing program.

The control method obtains the same effects as the numerical control device according to claim 1.

A program according to claim 8 causes a computer of a numerical control device for controlling a machine tool which includes a spouting mechanism that washes away chips generated by processing a workpiece disposed inside a cover based on a processing program, by spouting cutting fluid into the cover by driving a pump to execute: a first determination step of determining, based on a processing time from a processing start to a processing end based on the processing program, whether or not a specific time which is before a first prescribed time from a time at which the processing program ends has been reached; and a first pump drive step of driving, when the first determination step determines that the specific time has been reached, the pump for the first prescribed time from the specific time until an end of the processing program.

The program obtains the same effects as the numerical control device according to claim 1.

A storage medium according to claim 9 stores a program that causes a computer of a numerical control device for controlling a machine tool which includes a spouting mechanism that washes away chips generated by processing a workpiece disposed inside a cover based on a processing program, by spouting cutting fluid into the cover by driving a pump to execute: a first determination step of determining, based on a processing time from a processing start to a processing end based on the processing program, whether or not a specific time which is before a first prescribed time from a time at which the processing program ends has been reached; and a first pump drive step of driving, when the first determination step determines that the specific time has been reached, the pump for the first prescribed time from the specific time until an end of the processing program.

The storage medium obtains the same effects as the numerical control device according to claim 1.

### BRIEF DESCRIPTION OF THE DRAWINGS

FIG. 1 is a perspective view of a machine tool 1 viewed from the rear.
FIG. 2 is a front view of the machine tool 1.
FIG. 3 is a plan view of the machine tool 1.
FIG. 4 is a cross-sectional view taken along the line I-I shown in FIG. 3.
FIG. 5 is a diagram showing a state of a tool T attached to a spindle 7 processing a workpiece W.
FIG. 6 is a block diagram showing the electrical configuration of a numerical control device 30 and the machine tool 1.
FIG. 7 is a diagram showing parameters for flag setting.
FIG. 8 is a diagram showing the flag of pump drive.
FIG. 9 is a diagram showing parameters for flag setting.
FIG. 10 is a diagram showing the flag of pump drive.
FIG. 11 is a diagram showing the relationship between an operation pattern A, an operation pattern B, and the driving state of the pump 22.
FIG. 12 is a flowchart of the main process.
FIG. 13 is a diagram showing the flag of pump drive of a modified example.

### DESCRIPTION OF EMBODIMENTS

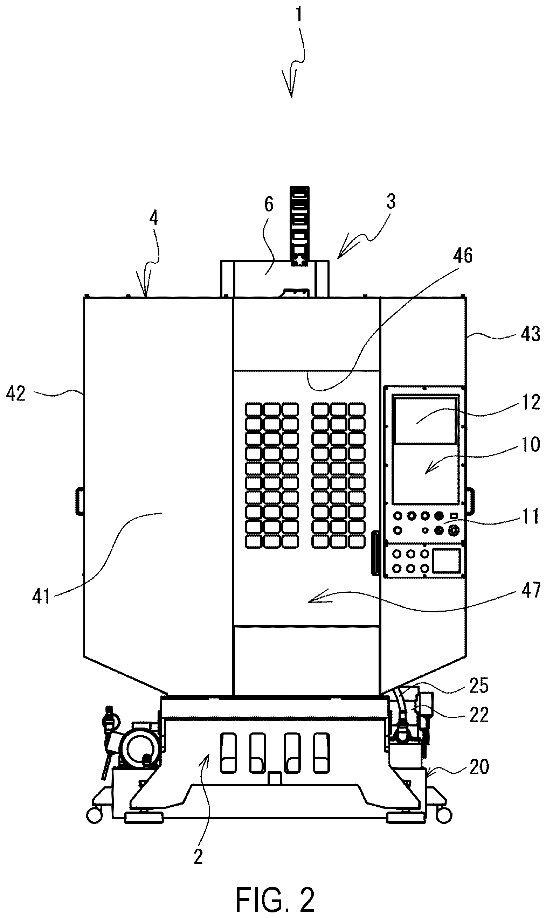

An embodiment of the present invention is described with reference to the drawings. In the following description, the direction toward the front of the plane of FIG. 2, the direction toward the depth of the plane of FIG. 2, the left direction, the right direction, the upward direction, and the downward direction are respectively defined as the front direction, the rear direction, the left direction, the right direction, the upward direction, and the downward direction of a machine tool 1. The left-right direction, the front-rear direction, and the up-down direction of the machine tool 1 are respectively the X-axis direction, the Y-axis direction, and the Z-axis direction of the machine tool 1.

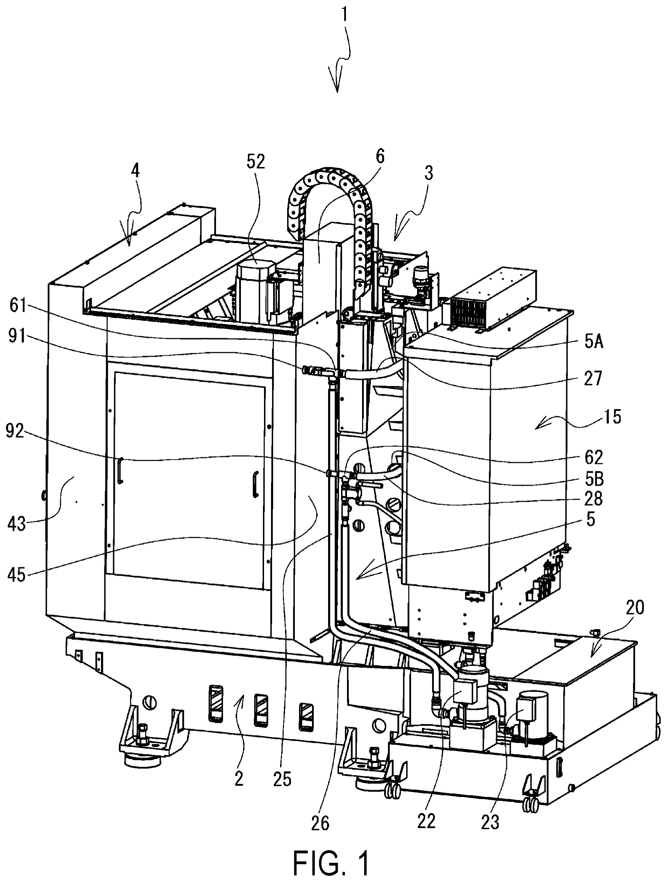

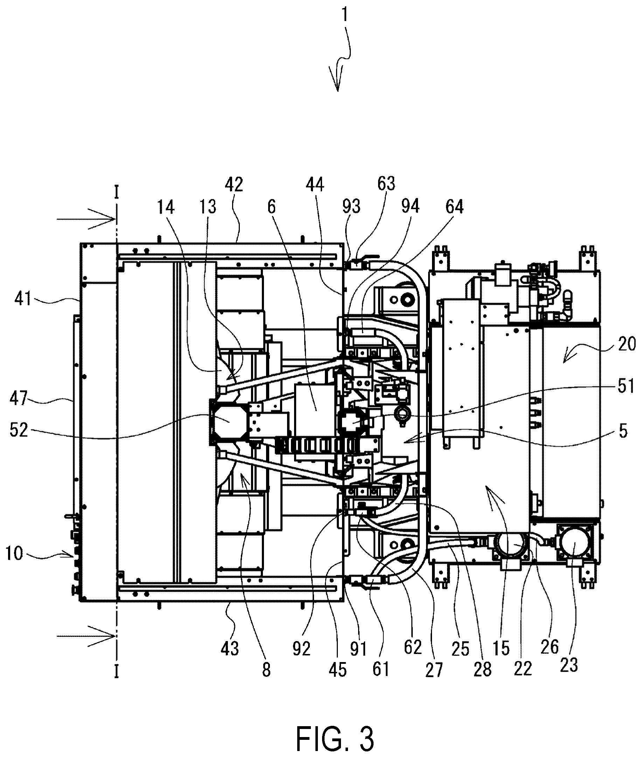

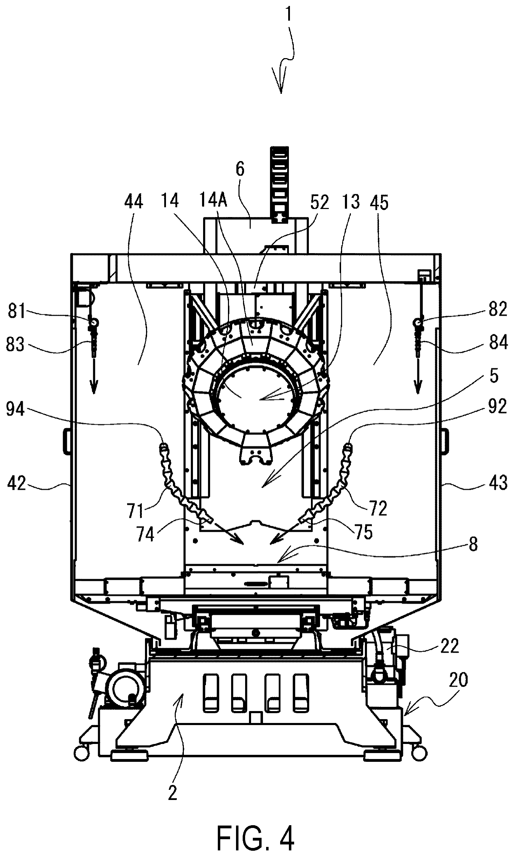

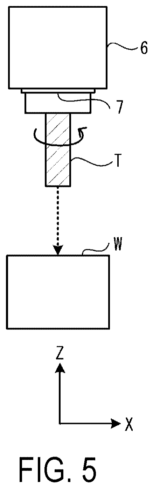

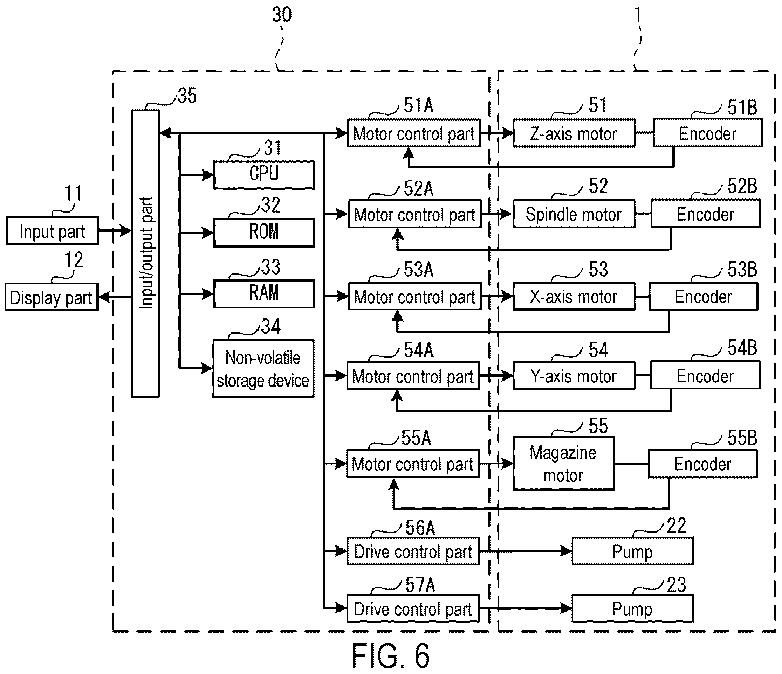

Referring to FIGS. 1 to 4, an outline of the structure of the machine tool 1 is described. The machine tool 1 includes a base 2, a machine body 3, a cover 4, a table 8 (refer to FIG. 3), a tool exchange device 13 (refer to FIG. 4), a control box 15, and the like. The base 2 is an approximately rectangular parallelepiped iron foundation. The machine body 3 is provided on an upper part of the base 2 and performs cutting processing on a workpiece W (refer to FIG. 5) held on an upper surface of the table 8. Types of cutting processing are, for example, drilling, tapping, milling, and the like. The cover 4 is provided on an upper part of the base 2 and is an approximately rectangular parallelepiped box shape that covers the periphery of the machine body 3 and the upper part of the base 2. The cover 4 prevents chips and splashing of cutting fluid from scattering to the outside. As shown in FIG. 4, the table 8 is provided at a central upper part of the base 2, and is movable in the X-axis direction and the Y-axis direction by an X-axis motor 53 (refer to FIG. 6), a Y-axis motor 54 (refer to FIG. 6), an X-axis guide mechanism and a Y-axis guide mechanism (not shown), and the like. Each of the guide mechanisms includes a linear guide, a ball screw, a nut (not shown), and the like. A workpiece W (refer to FIG. 5) can be fixed to the upper surface of the table 8 using a jig or the like.

As shown in FIG. 4, the tool exchange device 13 includes a tool magazine 14. The disc-shaped tool magazine 14 includes multiple grip arms 14A around the outer periphery thereof. The grip arm 14A holds a tool T (refer to FIG. 5) at a tip part thereof and is capable of swinging between the tool T and a spindle 7 (refer to FIG. 5) of the machine body 3, which will be described later. The tool exchange device 13 swings the grip arm 14A located at a tool exchange position and attach and detach the tool T to and from the spindle 7. The tool exchange position is located at the lowermost position of the tool magazine 14 and at the position closest to the spindle 7. As shown in FIG. 1, the control box 15 is provided on the rear side of the cover 4 and houses the numerical control device 30 (refer to FIG. 6) inside. The numerical control device 30 controls the operation of the machine tool 1.

Referring to FIGS. 1 to 4, the configuration of the machine body 3 is described. The machine body 3 includes a column 5, a spindle head 6, the spindle 7 (refer to FIG. 5), and the like. The column 5 is erected at the rear of the upper part of the base 2. The spindle head 6 is able to be raised and lowered in the Z-axis direction along a front surface of the column 5 by a Z-axis movement mechanism (not shown). The Z-axis movement mechanism includes a linear guide, a ball screw, a nut (not shown), and the like. As shown in FIG. 5, the spindle head 6 internally rotatably supports the spindle 7. The spindle 7 has a tool T attached to the lower end part thereof and rotates by driving of a spindle motor 52 (refer to FIG. 3 and FIG. 6). The machine tool 1 can perform cutting processing on the workpiece W (refer to FIG. 5) held on the upper surface of the table 8 by relative movement between the workpiece W and the tool T attached to the spindle 7.

Referring to FIGS. 1 to 4, the structure of the cover 4 is described. The cover 4 includes a front wall 41, a left wall 42, a right wall 43, a left rear wall 44 (refer to FIGS. 3 and 4), and a right rear wall 45 (refer to FIGS. 3 and 4), and is formed in an approximately rectangular parallelepiped box shape. A lower end part of each of the walls 41 to 45 is fixed to an upper part of the base 2. As shown in FIGS. 3 and 4, the left rear wall 44 and the right rear wall 45 constitute a rear wall of the cover 4. The left rear wall 44 is fixed to a front end part of a left side surface of the column 5 and extends leftward. The right rear wall 45 is fixed to a front end part of a right side surface of the column 5 and extends rightward. The cover 4 covers the processing area of the machine tool 1. The processing area is an area that the machine tool 1 requires for workpiece processing, and is an area that includes at least the movable range of the spindle head 6 and the spindle 7 in the Z-axis direction and the movable range of the table 8 in the XY direction. The cover 4 includes a cutting fluid spouting mechanism (hereinafter referred to as "spouting mechanism"). The spouting mechanism spouts cutting fluid inside the cover 4. Therefore, the machine tool 1 can wash away chips that are generated during workpiece processing and adhere to and accumulate inside the cover 4. Further, the structure of the spouting mechanism will be described later.

As shown in FIG. 2, the front wall 41 includes an opening part 46, an opening and closing door 47, and an operation panel 10. The opening part 46 is provided at approximately the center of the front wall 41 and has a rectangular shape in a front view. The opening and closing door 47 is provided in the opening part 46 so as to be movable in the left-right direction. An operator can open the opening and closing door 47 and attach and detach the workpiece W to and from the upper surface of the table 8. The operation panel 10 is provided on a right side of the opening part 46. The operation panel 10 is connected to the numerical control device 30 (refer to FIG. 6) by a harness (not shown). The operation panel 10 includes an input part 11 and a display part 12. The input part 11 is a device that enables input of various operation instructions for the machine tool 1, a processing program, a tool type, a tool diameter, various parameters, and the like. The processing program is configured with multiple blocks including various control commands, and the numerical control device 30 controls various operations of the machine tool 1, including axis movement, tool exchange, and the like, in block units based on the processing program. The display part 12 receives instructions from the numerical control device 30 and is able to display various input screens or operation screens, and the like.

Referring to FIGS. 1, 3, and 4, the structure of the spouting mechanism will be described. The spouting mechanism is composed of a spouting part and a supply part. The spouting part is provided inside the cover 4, and spouts cutting fluid inside the cover 4. The supply part is provided outside the cover 4, and supplies cutting fluid to the spouting part.

Referring to FIG. 4, the configuration of the spouting part is described. The spouting part is configured with a pair of flexible pipes 71 and 72, a pair of cutting fluid nozzles 74 and 75, a pair of cutting fluid piping 81 and 82, multiple chip showers 83 and 84, and the like. The flexible pipe 71 extends from a through hole 94 provided in the left rear wall 44 toward the upper surface of the table 8. The through hole 94 is provided at an approximately middle position in the up-down direction on a right end side of the left rear wall 44. The cutting fluid nozzle 74 is provided at a tip of the flexible pipe 71. The flexible pipe 72 extends from a through hole 92 provided in a right rear wall 45 toward the upper surface of the table 8. The through hole 92 is provided at an approximately middle position in the up-down direction on a left end side of the right rear wall 45. The cutting fluid nozzle 75 is provided at a tip of the flexible pipe 72. The cutting fluid nozzles 74 and 75 are directed toward the upper surface of the table 8 by bending the flexible pipes 71 and 72.

The cutting fluid piping 81 extends forward and horizontally from a through hole 93 (refer to FIG. 3) provided in an upper part of a left end side of the left rear wall 44. The cutting fluid piping 82 extends forward and horizontally from a through hole 91 (refer to FIG. 3) provided in an upper part of a right end side of the right rear wall 45. The cutting fluid piping 81 includes multiple holes (not shown) at prescribed intervals in a lower part. The chip showers 83 are respectively installed in the holes provided in the lower part of the cutting fluid piping 81. The cutting fluid piping 82 also includes multiple holes (not shown) at prescribed intervals in a lower part. The chip showers 84 are respectively installed in the holes provided in the lower part of the cutting fluid piping 82. The chip showers 83 and 84 direct the spouting direction of the cutting fluid downward.

Referring to FIGS. 1 and 3, the configuration of the supply part is described. As shown in FIG. 1, the supply part is configured with a tank 20, pumps 22 and 23, main hoses 25 and 26, branch hoses 27 and 28, T-shaped joints 61 and 62, joints 63 and 64 (refer to FIG. 3), and the like. The tank 20 is disposed behind the base 2 and stores cutting fluid. The pumps 22 and 23 are provided adjacent to a right side of the tank 20. The main hose 25 is connected to the pump 22. The main hose 26 is connected to the pump 23. The pump 22 pumps the cutting fluid in the tank 20 and supplies the cutting fluid to the main hose 25. The pump 23 pumps the cutting fluid in the tank 20 and supplies the cutting fluid to the main hose 26.

The T-shaped joint 61 is connected from an outside of the cover 4 to the through hole 91 provided in the upper part of the right end side of the right rear wall 45. The T-shaped joint 62 is connected from an outside of the cover 4 to the through hole 92 provided in the middle position in the up-down direction of the left end side of the right rear wall 45. As shown in FIG. 3, the joint 63 is connected from an outside of the cover 4 to the through hole 93 provided in the upper part of the left end side of the left rear wall 44. The joint 64 is connected from an outside of the cover 4 to the through hole 94 (refer to FIG. 4) provided in the middle position in the up-down direction of the right end side of the left rear wall 44.

The main hose 25 and the branch hose 27 are respectively connected to the T-shaped joint 61. The branch hose 27 extends to a left side of the column 5 via a rear side of the column 5, and is connected to the joint 63 provided in the left rear wall 44 (refer to FIG. 3). The main hose 26 and the branch hose 28 are respectively connected to the T-shaped joint 62. The branch hose 28 passes through a hole 5B (refer to FIG. 1) provided in the column 5, extends to a left side of the column 5, and is connected to the joint 64 provided in the left rear wall 44 (refer to FIG. 3). The hole 5B is provided in a middle position in the up-down direction of the column 5 and penetrates in the left-right direction.

Referring to FIGS. 1, 3, and 4, an operation of the spouting mechanism is described. In response to the pump 23 being driven, the cutting fluid flows through the main hose 26. The cutting fluid branches at the T-shaped joint 62, one of which flows to the flexible pipe 72 via the through hole 92, and the other of which flows to the branch hose 28. The cutting fluid that flows to the flexible pipe 72 vigorously spouts from the cutting fluid nozzle 75. The cutting fluid that flows to the branch hose 28 flows from the joint 64 on an opposite side of the column 5, via the through hole 94, through the flexible pipe 71, and vigorously spouts from the cutting fluid nozzle 74. The cutting fluid nozzles 74 and 75 can directly direct the cutting fluid from both left and right sides to a portion to be processed (not shown) of the workpiece W fixed on the upper surface of the table 8 with a jig or the like. The cutting fluid can wash off chips adhering to the portion to be processed.

In response to the pump 22 being driven, the cutting fluid flows through the main hose 25. The cutting fluid branches at the T-shaped joint 61, one of which flows through the cutting fluid piping 82 via the through hole 91, and the other of which flows to the branch hose 27. The cutting fluid that flows to the cutting fluid piping 82 vigorously spouts downward from the chip showers 84. The cutting fluid that flows to the branch hose 27 flows from the joint 63 on an opposite side of the column 5, via the through hole 93, through the cutting fluid piping 81, and vigorously spouts downward from the chip showers 83. Therefore, the cutting fluid can wash off chips adhering and accumulating on an inside of the cover 4.

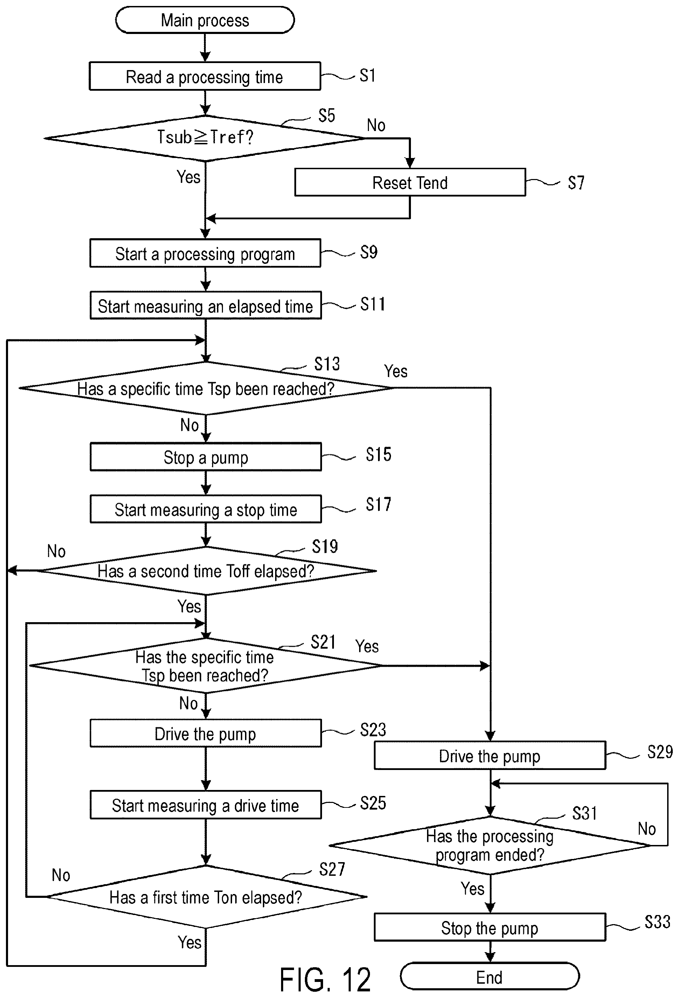

Referring to FIG. 6, an electrical configuration of the numerical control device 30 and the machine tool 1 are described. The numerical control device 30 includes a CPU 31, a ROM 32, a RAM 33, a non-volatile storage device 34, an input/output part 35, motor control parts 51A to 55A, drive control parts 56A and 57A, and the like. The CPU 31 integrally controls the numerical control device 30. The ROM 32 stores a control program and the like. The control program executes a main process (refer to FIG. 12) described later. The RAM 33 includes various storage areas. The non-volatile storage device 34 stores multiple processing programs and the like input by an operator at the input part 11 of the operation panel 10. Note that the control program stored in the ROM 32 may be stored in a readable external storage medium (USB memory, CD-ROM, or the like). The CPU 31 may read a program from the storage medium, store the program in the non-volatile storage device 34, and execute the control program stored in the non-volatile storage device 34. Further, the machine tool 1 may be communicable with other devices (a server or the like) via a communication line. The control program may be stored in a storage device of the other devices. The CPU 31 may store the control program acquired by performing communication with the other devices in the non-volatile storage device 34. The control program corresponds to a program of the present invention. A USB memory, a CD-ROM, a server, other devices, or the like correspond to the storage medium.

The motor control part 51A connects to a Z-axis motor 51 and an encoder 51B. The motor control part 52A connects to the spindle motor 52 and an encoder 52B. The motor control part 53A connects to an X-axis motor 53 and an encoder 53B. The motor control part 54A connects to a Y-axis motor 54 and an encoder 54B. The motor control part 55A connects to a magazine motor 55 and an encoder 55B. The drive control part 56A connects to the pump 22. The drive control part 57A connects to the pump 23. The motor control parts 51A to 55A receive a command from the CPU 31 and respectively output a drive current to the corresponding motors 51 to 55.

The motor control parts 51A to 55A receive a feedback signal from the encoders 51B to 55B and perform position and speed feedback control. The input/output part 35 respectively connects to the input part 11 and the display part 12. The drive control parts 56Aand 57A receive a command from the CPU 31 and respectively output a drive current to the corresponding pumps 22 and 23. The pumps 22 and 23 are respectively driven with the drive current. The Z-axis motor 51, the spindle motor 52, the X-axis motor 53, the Y-axis motor 54, and the magazine motor 55 are all servomotors. Note that, in the following description, in the case of collectively referring to the Z-axis motor 51, the spindle motor 52, the X-axis motor 53, the Y-axis motor 54, and the magazine motor 55, they are referred to as respective motors 51 to 55.

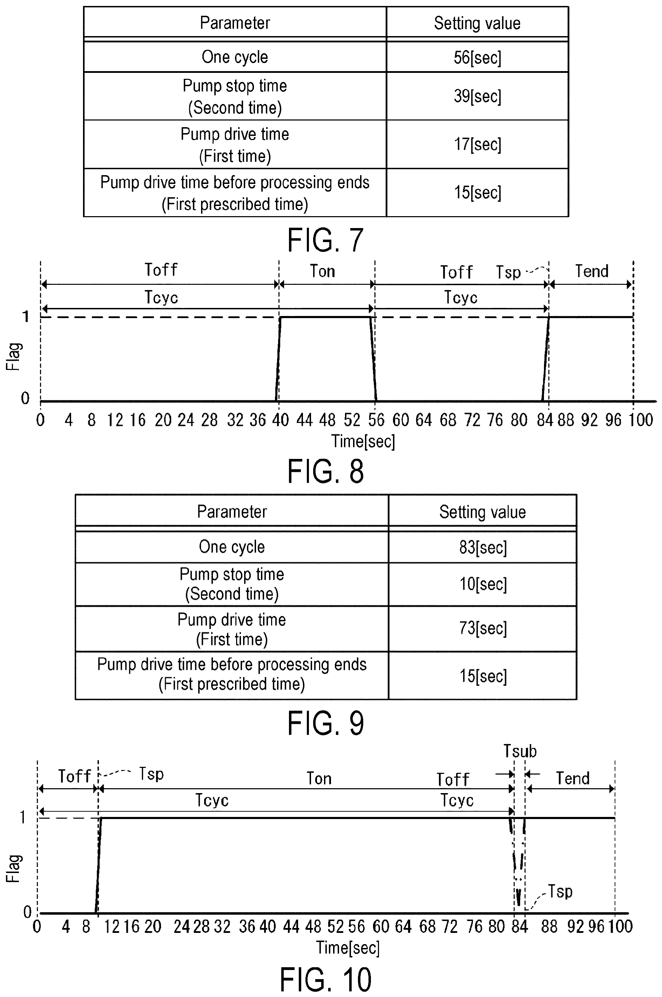

An example of parameter setting and flag setting of the pump 22 is described with reference to FIGS. 7 and 8. An operator operates the operation panel 10 to set each of parameters related to driving of the pump 22. The processing time is assumed to be 100 seconds for convenience of description. The processing time is the time from the processing start to the processing end of the workpiece W by the processing program. The processing time is stored in the non-volatile storage device 34 in association with each of processing programs.

As shown in FIG. 7, the pump 22 is driven and stopped once per one cycle Tcyc, and one cycle Tcyc is 56 seconds. The stop time of the pump 22 (hereinafter referred to as a second time Toff) is 39 seconds, and the drive time of the pump 22 (hereinafter referred to as a first time Ton) is 17 seconds. The drive time of the pump 22 before the processing end (hereinafter referred to as a first prescribed time Tend) is set to 15 seconds per operation of the processing program. The first prescribed time Tend is shorter than the first time Ton. The time 85 seconds after the processing start is referred to as a specific time Tsp. That is, upon arrival at the specific time Tsp after the processing start, the pump 22 is driven until the end of the processing program.

As shown in FIG. 8, the flag of the pump 22 is set by the CPU 31 based on the parameters set by the operator. In the case of the flag being "0", the pump 22 is stopped. In the case of the flag being "1", the pump 22 is driven. The numerical control device 30 starts processing of the workpiece W at time 0 seconds. During the second time Toff (39 seconds) from time 0 seconds to time 39 seconds, the flag becomes "0". During the first time Ton (17 seconds) from time 39 seconds to time 56, the flag becomes "1".

Upon arrival at time 56 seconds, the second cycle Tcyc starts. At this time, the flag becomes "0". After time 56 seconds, and until the elapse of the second time Toff, the flag becomes "0". At time 85 seconds, that is, upon arrival at the specific time Tsp, the flag becomes "1" again. During the first prescribed time Tend from time 85 seconds, which is the specific time Tsp, until the completion of processing at time 100 seconds, the flag becomes 1.

An example of parameter setting and flag setting of the pump 22 is described with reference to FIGS. 9 and 10. In the following description, the processing time is assumed to be 100 seconds, similar to the case of FIGS. 7 and 8. In the case of FIGS. 9 and 10, compared to the case of FIGS. 7 and 8, the time of one cycle Tcyc is longer. As shown in FIG. 9, one cycle Tcyc is set to 83 seconds. The second time Toff is set to 10 seconds, and the first time Ton is set to 73 seconds. The first prescribed time Tend is set to 15 seconds before the processing end. That is, the specific time Tsp is 85 seconds. The first prescribed time Tend is shorter than the first time Ton.

As shown in FIG. 10, processing starts at time 0 seconds. During the second time Toff (10 seconds) from time 0 seconds to time 10 seconds, the flag becomes "0". During the first time Ton (73 seconds) from time 10 seconds to time 83 seconds, the flag becomes "1". Upon arrival at time 83 seconds, it becomes the start time of the second time Toff of the next cycle Tcyc, but 2 seconds later, it reaches 85 seconds, which is the specific time Tsp. At this time, since the pump 22 performs stopping and driving in a short time, the machine tool 1 consumes more power than necessary.

In this case, even in the case of reaching 83 seconds, which is the start time of the second cycle Tcyc, the flag is set to "1". In this way, the pump 22 is prevented from performing stopping and driving in a short time. For example, in the case of the time from the last drive stop of the pump 22 before the end of the processing program to the specific time Tsp (hereinafter, also referred to as a second prescribed time Tsub) being shorter than a reference time Tref, the flag maintains "1". The reference time Tref is, for example, 3 seconds, and may be determined according to the specifications of the pump 22.

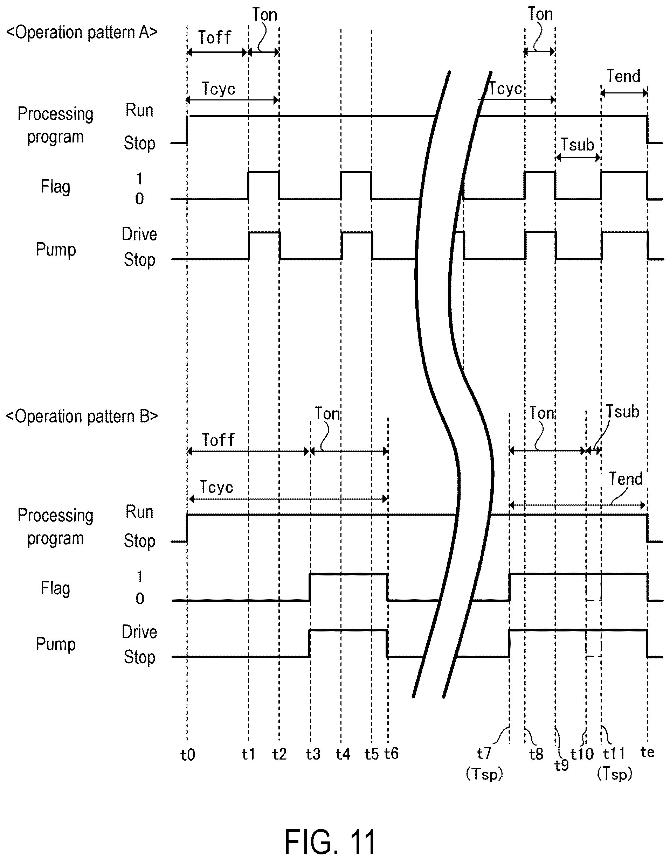

With reference to FIG. 11, an operation pattern A and an operation pattern B of the processing program are briefly described. The operation pattern A and the operation pattern B are different from the example shown in FIGS. 7 to 10, and the processing time is long with respect to one cycle Tcyc. Therefore, from the processing start time t0, driving and stopping of the pump 22 are repeated over multiple cycles Tcyc. Due to this repetition of the cycle Tcyc, the spouting mechanism discharges the generated chips. In the case of the operation pattern A and the operation pattern B, since the pump 22 performs intermittent drive, the numerical control device 30 can reduce power consumption.

The operation pattern A is a case where the second prescribed time Tsub is longer than the reference time Tref. The pump 22 is stopped from the start of the last second time Toff until the specific time Tsp. Upon arrival at the specific time Tsp, the pump 22 is driven. From the specific time Tsp until a time te at which the processing program ends, the pump 22 is driven. Therefore, the numerical control device 30, while discharging chips generated by long-time processing in one cycle Tcyc that is repeatedly performed with the cutting fluid, can also discharge chips generated from the specific time Tsp to a time Te.

The operation pattern B is a case where the second prescribed time Tsub is shorter than the reference time Tref. In this case, at time t10, the pump 22 is not stopped for the second time Toff. The numerical control device 30 sets time t7 as the specific time Tsp, and resets the time from time t7 to the time Te as the first prescribed time Tend. In other words, from time t7 until the time te at which the processing program ends, the pump 22 continues to be driven. Therefore, the numerical control device 30 can suppress power consumption in the machine tool 1, which results from repeating the driving and stopping of the pump 22 in a short time.

With reference to FIG. 12, the main process is described. In the following description, it is assumed that parameters for driving the pump 22 has already been set. An operator selects a processing program at the input part 11 and inputs a start instruction. The CPU 31 reads out the processing program selected at the input part 11 from the non-volatile storage device 34 and executes the process.

The CPU 31, referring to the non-volatile storage device 34, reads the processing time corresponding to the processing program selected by the operator (S1).

The CPU 31 determines whether or not the second prescribed time Tsub is greater than or equal to the reference time Tref (S5). In the case of determining that the second prescribed time Tsub is greater than or equal to the reference time Tref (S5: YES), the CPU 31 maintains the first prescribed time Tend among the parameters received in S1, and proceeds the process to S9. Therefore, the operation pattern A of FIG. 11 may be executed. In other words, the specific time Tsp is not changed from the time at parameter setting.

In the case of determining that the second prescribed time Tsub is shorter than the reference time Tref (S5: NO), the CPU 31 resets the time from the drive start time of the pump 22 of the last first time Ton until the end of the processing program to the first prescribed time Tend (S7). Therefore, the operation pattern B of FIG. 11 may be executed. In this case, the specific time Tsp becomes a time earlier than the specific time Tsp at parameter setting. The first prescribed time Tend is longer than the time at parameter setting in the process of S1.

The CPU 31 starts the processing program (S9). The CPU 31 starts measuring the elapsed time from the start of the processing program (S11). The CPU 31 determines whether or not the specific time Tsp has been reached, which is before the first prescribed time Tend from the time te at which the processing program ends (S13). In the case of determining that the specific time Tsp has not been reached (S13: NO), the CPU 31 sets a flag to 0 and stops the pump 22 (S15). The CPU 31 starts measuring the stop time after stopping the pump 22 (S17).

The CPU 31 determines whether or not the stop time of the pump 22 has passed the second time Toff (S19). In the case of determining that the stop time of the pump 22 has not passed the second time Toff (S19: NO), the CPU 31 returns the process to S13. The CPU 31 keeps the pump 22 stopped until the second time Toff elapses. Here, it may occur that the specific time Tsp is reached during the stop of the pump 22. In such a case, determining that the specific time Tsp has been reached (S13: YES), the CPU 31 proceeds the process to S29.

In the case of determining that the stop time of the pump 22 has passed the second time Toff seconds (S19: YES), the CPU 31, similarly to the process of S13, determines whether or not the specific time Tsp has been reached (S21). In the case of determining that the specific time Tsp has not been reached (S21: NO), the CPU 31 sets a flag to "1" and drives the pump 22 (S23).

The CPU 31 starts measuring the drive time of the pump 22 (S25). The CPU 31 determines whether or not the drive time of the pump 22 has passed the first time Ton (S27). In the case of determining that the drive time of the pump 22 has not passed the first time Ton (S27: NO), the CPU 31 returns the process to S21. In other words, the CPU 31 drives the pump 22 until the first time Ton elapses. Here, the specific time Tsp may be reached during the driving of the pump 22. In such a case, determining that the specific time Tsp has been reached (S21: YES), the CPU 31 proceeds the process to S29.

On the other hand, in the case where the drive time of the pump 22 has passed the first time Ton (S27: YES), the CPU 31 returns the process to S13. At this time, in the case where the specific time Tsp has not been reached (S13: NO), the CPU 31 stops the driving of the pump 22, and performs control of the pump 22 for the next one cycle Tcyc (S13 to S27).

In response to the specific time Tsp having been reached, the CPU 31 sets a flag to "1" and drives the pump 22 (S29). In the case where the pump 22 is already being driven (S27: NO=>S21: YES), the CPU 31 maintains the flag "1" and drives the pump 22.

The CPU 31 determines whether or not the processing program has ended, that is, whether or not the first prescribed time Tend has elapsed (S31). In the case of determining that the processing program has not ended (S31: NO), the CPU 31 returns the process and waits. At this time, the CPU 31 continues driving the pump 22. In the case of determining that the processing program has ended (S31: YES), the CPU 31 sets a flag to "0" and stops the pump 22 (S33). In other words, in response to determining that the specific time Tsp has been reached (S9: YES; S17: YES), the CPU 31 drives the pump 22 for the first prescribed time Tend, which is from the specific time Tsp until the end of the processing program. The CPU 31 ends the process.

As described above, the CPU 31, based on the processing time from the processing start to the processing end according to the processing program, determines whether or not the specific time Tsp has been reached, which is before the first prescribed time Tend from the time te at which the processing program ends. In response to determining that the specific time Tsp has been reached, the CPU 31 drives the pump 22 for the first prescribed time Tend, which is from the specific time Tsp until the end of the processing program.

The numerical control device 30, by the driving of the pump 22 for the first prescribed time Tend, can reliably wash away chips by the end of the processing program. Therefore, the numerical control device 30 can drive the spouting mechanism of cutting fluid at an appropriate timing.

The CPU 31 intermittently drives the pump 22 during execution of the processing program. Therefore, the numerical control device 30 can reduce power consumption compared to a case in which the pump 22 is constantly driven.

The CPU 31 repeatedly drives the pump 22 for the first time Ton, and, after driving the pump 22 for the first time Ton, stops the pump for the second time Toff. The first prescribed time Tend is shorter than the first time Ton. According to some processing programs, there are cases where merely a small amount of chips is generated in the latter half of processing. In such a case, even if the first prescribed time Tend is shorter than the first time Ton, chips can be sufficiently washed away, and therefore power consumption can be reduced.

The CPU 31 repeatedly executes driving the pump 22 for the first time Ton and, after driving the pump 22 for the first time Ton, stopping the pump 22 for the second time Toff during execution of the processing program. The CPU 31 determines whether or not the second prescribed time Tsub, which is from the last drive stop of the pump 22 before the end of the processing program until the specific time Tsp, is shorter than the predetermined reference time Tref. In the case of determining that the second prescribed time Tsub is shorter than the reference time Tref, the CPU 31 sets the time from the drive start time of the pump 22 for the last first time Ton until the end of the processing program as the first prescribed time Tend, and drives the pump 22 for the first prescribed time Tend. The numerical control device 30, by resetting the first prescribed time Tend, can prevent the pump 22 from being stopped and driven in a short time. Therefore, the numerical control device 30 can achieve low power consumption.

In the description above, the CPU 31 that executes the processes of S13 and S21 is an example of a first determination part of the present invention. The CPU 31 that executes the process of S29 is an example of a first pump drive part of the present invention. The CPU 31 that executes the processes of S13 to S27 is an example of a second pump drive part of the present invention. The CPU 31 that executes the process of S5 is an example of a second determination part of the present invention. The CPU 31 that executes the process of S7 is an example of a setting part of the present invention.

The present invention is not limited to the above-described embodiment, and various modifications may be made. In the above-described embodiment, the flag of the pump 22 is set while executing the main process, but the present invention is not limited thereto. For example, at parameter setting, the flag of the pump 22 may also be set in advance. In this case, the CPU 31 merely needs to drive the pump 22 based on the set flag.

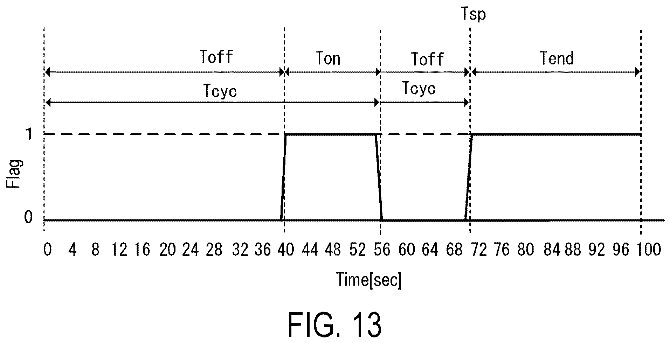

In the above-described embodiment, the first prescribed time Tend is shorter than the first time Ton, but the present invention is not limited thereto. For example, as shown in FIG. 13, the first prescribed time Tend may be longer than the first time Ton. Before the end of the processing program, the numerical control device 30 drives the pump 22 for the first prescribed time Tend, which is longer than the first time Ton for which the driving of the pump 22 is repeatedly performed. Therefore, the numerical control device 30 can more reliably wash away chips by the end of the processing program. In other words, the operator sets the parameters in this manner in the case of placing importance on chip discharge performance rather than energy saving performance.

In the above-described embodiment, driving and stopping of the pump 22 for at least one cycle Tcyc is performed, but the present invention is not limited thereto. For example, also in the case of reaching the specific time Tsp before one cycle Tcyc ends, driving of the pump 22 may be started similarly to the above-described embodiment.

In the above-described embodiment, intermittent driving is performed by driving the pump 22 for the first time Ton and stopping the pump 22 for the second time Toff, but the present invention is not limited thereto. For example, the CPU 31 may detect the flow rate of the cutting fluid with a sensor that detects the flow rate of the cutting fluid, and may stop the pump 22 in the case of the detection result detecting a predetermined flow rate. Alternatively, in the case of a liquid level sensor provided inside the tank 20 detecting a predetermined position, that is, in the case of a predetermined amount of cutting fluid having flowed out to the outside, the pump 22 may be stopped.

### Reference Signs List

1: machine tool
4: cover
22: pump
30: numerical control device
31: CPU
W: workpiece
Tsp: specific time
Ton: first time
Toff: second time
Tend: first prescribed time
Tsub: second prescribed time
Tref: reference time

## Claims

1. A numerical control device for controlling a machine tool which comprises a spouting mechanism that washes away chips generated by processing a workpiece disposed inside a cover based on a processing program, by spouting cutting fluid into the cover by driving a pump, the numerical control device comprising:
a first determination part, determining, based on a processing time from a processing start to a processing end based on the processing program, whether or not a specific time which is before a first prescribed time from a time at which the processing program ends has been reached; and
a first pump drive part, driving, when the first determination part determines that the specific time has been reached, the pump for the first prescribed time from the specific time until an end of the processing program.

2. The numerical control device according to claim 1, comprising a second pump drive part, intermittently driving the pump during execution of the processing program.

3. The numerical control device according to claim 2, wherein
the second pump drive part repeatedly executes driving the pump for a first time, and after the driving of the pump for the first time, stopping the pump for a second time, and
the first prescribed time is shorter than the first time.

4. The numerical control device according to claim 2, wherein
during execution of the processing program, the second pump drive part repeatedly executes driving the pump for a first time, and after the driving of the pump for the first time, stopping the pump for a second time, and
the first prescribed time is longer than the first time.

5. The numerical control device according to claim 1, comprising:
a second pump drive part, repeatedly executing driving the pump for a first time, and after the driving of the pump for the first time, stopping the pump for a second time during execution of the processing program; a second determination part, determining whether or not a second prescribed time from a last drive stop of the pump before the end of the processing program until the specific time is shorter than a predetermined reference time; and
a setting part, setting, when the second determination part determines that the second prescribed time is shorter than the reference time, a time from a drive start time of the pump of the last first time until the end of the processing program to the first prescribed time, and
the first pump drive part driving the pump for the first prescribed time set by the setting part.

6. A machine tool, comprising:
the spouting mechanism, washing away the chips generated by processing the workpiece disposed in the cover based on the processing program, by spouting the cutting fluid into the cover by driving the pump; and
the numerical control device according to any one of claims 1 to 5.

7. A control method for a numerical control device for controlling a machine tool which comprises a spouting mechanism that washes away chips generated by processing a workpiece disposed inside a cover based on a processing program, by spouting cutting fluid into the cover by driving a pump, the control method comprising:
a first determination step of determining, based on a processing time from a processing start to a processing end based on the processing program, whether or not a specific time which is before a first prescribed time from a time at which the processing program ends has been reached; and
a first pump drive step of driving, when the first determination step determines that the specific time has been reached, the pump for the first prescribed time from the specific time until an end of the processing program.

8. A program, causing a computer of a numerical control device for controlling a machine tool which comprises a spouting mechanism that washes away chips generated by processing a workpiece disposed inside a cover based on a processing program, by spouting cutting fluid into the cover by driving a pump to execute:
a first determination step of determining, based on a processing time from a processing start to a processing end based on the processing program, whether or not a specific time which is before a first prescribed time from a time at which the processing program ends has been reached; and
a first pump drive step of driving, when the first determination step determines that the specific time has been reached, the pump for the first prescribed time from the specific time until an end of the processing program.

9. A storage medium storing a program, the program causing a computer of a numerical control device for controlling a machine tool which comprises a spouting mechanism that washes away chips generated by processing a workpiece disposed inside a cover based on a processing program, by spouting cutting fluid into the cover by driving a pump to execute:
a first determination step of determining, based on a processing time from a processing start to a processing end based on the processing program, whether or not a specific time which is before a first prescribed time from a time at which the processing program ends has been reached; and
a first pump drive step of driving, when the first determination step determines that the specific time has been reached, the pump for the first prescribed time from the specific time until an end of the processing program.
